# EUROPEAN PATENT APPLICATION

(11) **EP 3 188 522 A1**
(43) Date of publication of application: **05.07.2017**
(21) Application number: 14887263.3
(22) Date of filing: 10.09.2014
(51) Int. Cl.: H04W 12/06, H04W 4/02

(54) **AUTHENTICATION AND AUTHORIZATION METHOD AND APPARATUS FOR WIRELESS NETWORK AND PROGRAM**

(30) Priority: 27.03.2014 CN 201410119442
(71) Applicant: Zhang, Zhaolong, Beijing 100040 (CN)
(72) Inventor: Zhang, Zhaolong, Beijing 100040 (CN)
(74) Representative: Meyer-Dulheuer, Karl-Hermann
(86) International application number: PCT/CN2014/086221
(87) International publication number: WO 2015/143847

(57) **Abstract**

A method and apparatus for wireless network authentication and authorization, acquiring a mobile phone's location information with a wireless router, comparing the mobile phone's location information acquired by the wireless router with a predetermined location model, determining the match between the location information and the predetermined location model, acquiring the mobile phone's identity information with the wireless router, completing the authentication and authorization of the mobile phone, and permitting the mobile phone to access the wireless network.

## Description

### Field of the Invention

The present invention relates to the field of electronic devices, in particular wireless network devices, and more specifically, the present invention relates to a method and apparatus for wireless network device-related authentication and authorization.

### Description of the Related Art

Wireless local area network has been increasingly used in homes, offices and public areas, wherein the most commonly used wireless communication technologies are those based on IEEE 802.11 standards.

WiFi is a short-range wireless communication technology with the communication range typically within 100 m. A WiFi network comprises wireless access points (APs) and wireless network cards. With the wireless APs, WiFi may communicate with Internet, and may also communicate with devices that support WiFi applications, e.g. various mobile terminals such as mobile phones, laptop computers, tablet computers, etc. As a result, a user may access Internet with a device that supports WiFi applications via a wireless AP. In a regular application environment, a wireless router accesses Internet via an Ethernet port, and a mobile terminal communicates with the wireless router in a wireless manner to consequently access Internet.

For a mobile terminal to access WiFi, a process of authentication and authorization is typically required. When a user has purchased a WiFi router, AP and other WiFi access points, it is necessary to set up a system user name password, a WiFi network password, a wide area network verified user name password, etc. When accessing a WiFi network on a mobile phone, laptop computer, palm computer, etc., the user needs to execute operations such as searching the access list, inputting configuration parameters and signal matching. When setting up passwords and carrying out the first access, in addition, the user further needs to choose an encryption method, such as WEP, WPA-AES, WPA-TKIP, WPA2-AES and WPA2-TKIP. These operations have complicated steps and require long time to configure. In particular, a user who is not familiar with the WiFi access operations may need relatively more time to study and complete the operations, which affects the user experience.

As a result, an improved authentication and authorization solution is needed to meet the requirements of users for efficiently accessing a wireless network under different application scenarios.

### Summary of the Invention

The object of the present invention is to provide a method and apparatus for wireless Network authentication and authorization such that a user can efficiently access a **wireless** network.

According to the solution of the present invention, a wireless router is provided, comprising a location information acquisition module, an identity information collection module, and an authentication and authorization module, the location information acquisition module acquires the location information of a mobile terminal; the identity information collection module stores a predetermined location model and the corresponding relation between the location model and the identity information, determines that the location information matches the location model, and records the identity information of the mobile terminal; the authentication and authorization module determines that the location information matches the location model, completes the authentication and authorization of the mobile terminal, and permits the mobile terminal to access the network of the wireless router.

The wireless router further comprises an identity verification module for determining the access authority of a mobile terminal according to the preset corresponding relation between location relation and the access authority.

The wireless router further comprises a second verification module for verifying a mobile terminal that has been successfully authenticated and authorized by the authentication and authorization module according to user name password, or fingerprint, or iris, or sound wave, or two-dimensional code or dynamic password.

The wireless router further comprises an intelligent learning module for storing a location model, identity information, the corresponding relation between the location model and identity information, and the corresponding relation between the location model and access authority, sending them to a cloud platform module connected to the wireless router via a network, receiving revisions and adjustments made by the cloud platform module to them, and sending the revisions and adjustments to the location information acquisition module, the identity information verification module, the authentication and authorization module and the second verification module.

According to another aspect of the present invention, a method for wireless network authentication and authorization is provided, comprising the steps of:
Acquiring a mobile terminal's location information with a wireless router;
Comparing the mobile terminal's location information acquired by the wireless router with a predetermined location model, and determining the match between the location information and the predetermined location model;
Acquiring the mobile terminal's identity information with the wireless router; and

Completing the authentication and authorization of the mobile terminal, and permitting the mobile terminal to access the wireless network.

According to a further aspect of the present invention, the method comprises:
Awarding the mobile terminal a corresponding access authority according to the corresponding relation **between** the predetermined location **model** and the network access authority and based on the mobile terminal's location information.

According to another aspect of the present invention, the method **comprises**:
The authentication and authorization of a mobile terminal may further comprise a second verification process, which completes the authentication and authorization of the mobile terminal according to user name password, fingerprint, iris, sound wave, two-dimensional code or dynamic password.

According to another aspect of the present invention, the method comprises: sending the location information, the location model, the corresponding relation between the location model and access authority, and the identity information of the mobile terminal to a cloud server connected via a network, the cloud server analyzes the received information, makes adjustment or revision to the location model, the corresponding relation between the location model and access authority according to user behavior, user need and application need, and sends the adjustment and revision down to the wireless router.

### Brief Description of the Drawings

Fig. 1 illustrates the infrastructure of the wireless router according to the present invention;
Fig. 2 is the flow chart of the method for authentication and authorization according to the present invention.

### Detailed Description of the Preferred Embodiment

Specific embodiments of the present invention will be described below with reference to the accompanying drawings.

In the description of embodiments below, the method and apparatus according to the present invention are described with WiFi as an example. As a matter of fact, WiFi is just one of the wireless network technologies. Similar technologies include WAPI, ZigBee, WiMedia, Bluetooth, etc. The technical solution of the present invention may be implemented in the
Environment of all of these access technologies.

Some examples of the present invention use the distance between a router and a mobile terminal. The Publication of Chinese Patent Application No. 10358182A discloses a distance measurement method. According to this method, the mobile terminal obtains its distance from a hot spot according to the degree of intensity attenuation of signals received from the hot spot. This solution obtains a mobile terminal's distance from a hot spot and thereby achieves some applications, such as alarming. In the Chinese Patent Application No. 201410112820.X filed by the inventor of the present invention the other day, another solution for wireless network distance measurement is provided, wherein it comprises: a wireless router receives RF signals from a mobile device; according to the intensity of the received signals, the wireless router determines the range of distance between the mobile device and the wireless router based on the relation model between distance and signal intensity. The solution according to the Chinese Patent Application No. 201410112820.X further comprises that an accessory distance measurement device to the wireless router receives RF signals from a mobile device; according to the intensity of the received signals, the accessory distance measurement device determines the range of distance between the mobile device and the accessory distance measurement device based on the relation model between distance and signal intensity that is stored in the accessory distance measurement device, and the accessory distance measurement device sends the distance range information acquired thereby to the wireless router.

This indicates that according to the prior art, a wireless router is capable of acquiring the information regarding its distance from a mobile terminal.

As described above, an accessory distance measurement device may be used for distance measurement. For example, a WiFi wireless router equipped with an accessory distance measurement device may be used to measure the distance of a mobile phone. The accessory device does not function as a hot spot for WiFi to access Internet, and it does not conduct business data transmission with mobile phones. The accessory distance measurement device is like a shadow of a wireless router. It receives RF signals from mobile phones and the wireless router. It has the same capability of distance measurement as the wireless router, and sends the distance measurement result to the wireless router. The accessory distance measurement device is different from a wireless router in that it does not have the function of business data transmission between the wireless router and mobile phones. It is equivalent to a wireless router with reduced functions and can exist as an independent piece of hardware that is arranged at a position in the wireless network or loaded to a mobile terminal like a mobile phone in the form of an application APP. The wireless router, the accessory distance measurement device and the mobile phone form a three-point distance measurement scheme, or may even form a distance measurement scheme with more points. When distance measurement is carried out at three or more points, the location of the mobile phone whose distance is to be measured can be described to certain degree, although the location of the mobile phone cannot be exclusively Determined. In the description herein, therefore, the term "positioning" has the meaning in a broad sense, which means the description of a mobile phone's location using one or more distance measurement results. Similarly, the term "track" should also be interpreted to have the meaning in a broad sense, which means time-dependent changes of a mobile phone's location that is described using distance measurement results by one or more distance measurement devices. The wireless router and the accessory distance measurement device may measure the distance of a mobile phone at a time interval, e.g. Once per second, thereby forming the description of the "track" of the mobile phone.

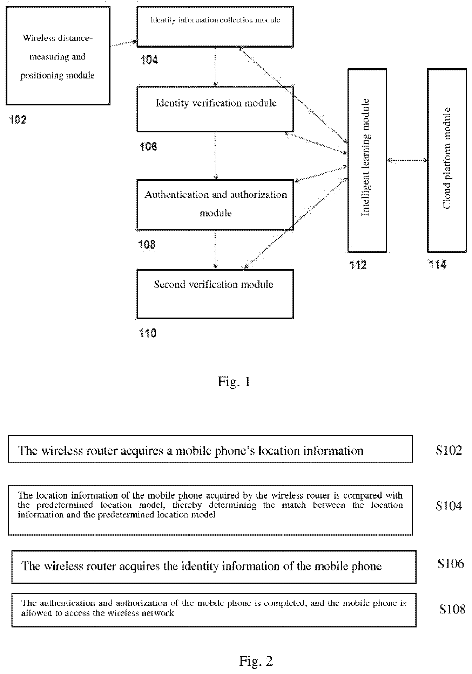

Fig. 1 illustrates the system infrastructure of the wireless router according to a n embodiment of the present invention. The system comprises a wireless distance-measuring and positioning module 102 for receiving RF signals from a mobile terminal, such as mobile phone, computer or intelligent device, and determines the distance that the mobile terminal is from the position of the module 102, thereby positioning the mobile phone. The module 102 can be implemented in the wireless router and therefore it determines the distance between the mobile phone and the wireless router, thereby positioning the mobile phone. There may be one or more modules 102. For example, it may be present in an accessory distance measurement device and send the distance between the mobile phone and the accessory distance measurement device to the wireless router. Together with the distance measurement result by the router itself, the wireless router will be able to acquire a number of distance measurement **and** positioning results for the mobile phone. The wireless router and the **accessory distance** measurement device may perform a number of distance measurements and positioning on the mobile phone at a number of time points, thereby acquiring the track information of the mobile phone.

It should be noted that the wireless distance-measuring and positioning module is one of the embodiments of the location information acquisition module according to the technical solution of the present invention. As another embodiment of the **location** information acquisition module, the mobile terminal itself may be installed with an application APP for wireless distance measurement and positioning, which performs distance measurement and positioning just like the wireless router does, and can send its own location information to the wireless router; the mobile terminal may comprise a GPS chip and positioning capability. Through communications with a GSP satellite system, the mobile terminal acquires its own location information and sends it to the wireless router.

As yet another embodiment of the location information acquisition module, the wireless router may acquire the location information of a mobile terminal from a third party, i.e. a third party other than the wireless router and the mobile terminal. For example, the above accessory distance measurement device is such a third party. It should also be understood that there may be other types of third parties, which have the location information of a mobile terminal and can directly or indirectly send the location information to the wireless router, and the wireless router acquires the location information of the mobile terminal by receiving the information from the Third party.

The several ways for a wireless router to acquire the location information are not mutually exclusive. They may exist independently or be present together in **various** combinations.

The system shown in Fig. 1 further comprises an identity information collection module 104. According to the location information of a mobile phone, the identity information collection module 104 establishes a corresponding relation between the location model and the identity information of the mobile phone, and stores the identity information of the mobile phone and the corresponding relation; when the identity information of the mobile phone is consistent with or matches the corresponding relation, the wireless router collects the identity information of the mobile phone from the signals sent by the mobile phone. The location model herein comprises the information of distance, relative position or movement track of the mobile phone relative to the wireless router or an accessory distance measurement device; the identity information of the mobile phone comprises the mobile phone's IP address, MAC address, mobile phone number, and mobile terminal device number, such as IMEI number. Such identity information is typically unique to a mobile terminal like mobile phone. In addition, the identity information of the mobile phone may further comprise manufacturer logo and time stamp.

The system shown in Fig. 1 further comprises an authentication and authorization module 108, which defines certain time and space. When the distance measurement results provided by the wireless distance-measuring and positioning module 102 on a mobile phone satisfy the defined temporal and spatial characteristics, the mobile phone is allowed to access the wireless network, thereby completing authentication and authorization. For example, the output result from the module 102 indicates that the mobile phone is within 5 cm of the wireless router and this state continues for 3 s. The time and space model defined by the module 108 is that access is allowed for duration of 3 s within a 5 cm range, then the authentication and authorization is successful. The module 108 may define a variety of time and space models, or may define a model only having spatial parameters, i.e. a location model in a narrow sense. For example, a mobile phone is allowed to access as long as it gets in the 5 cm distance range from the wirelessrouter.

It should be noted that the "location information" herein comprises the information of distance, relative position, and track, as well as the same information having a temporal attribute.

According to a further embodiment of the present invention, in the circumstance that the wireless router does not have the location information of a mobile phone, the wireless router completes authentication and authorization on the mobile phone according to the authentication and authorization mechanism that is predetermined in the authentication and authorization module 108 and in combination with the mobile phone identity information that is predetermined in the identity information collection module 104. For example, the predetermined authentication and authorization mechanism may allow mobile phones having certain identity information to access. The above circumstance that the wireless router does not have the location information of a mobile phone may comprise the circumstance that the mobile phone makes the first attempt to access the wireless network via the wireless router. Even when the wireless router has the location information of a mobile phone, it may still use this way to completes authentication and authorization according to the mobile phone's identity information and the predetermined authentication and authorization mechanism.

The system shown in Fig. 1 further comprises an identity verification module 106, a second verification module 110, an intelligent learning module 112 and a cloud platformmodule 114.

The identity verification module 106 stores the corresponding relation between the location model and access authority, and the location model may comprise the distance between a mobile phone and the wireless router, the association between the distance and time, changes to the mobile phone track, etc.; it matches the location information outputted by the wireless distance-measuring and positioning module with the stored location model, and awards mobile phones that meet different models with different access authorities, such as accessing or pushing different information, or providing prompt with a sound signal or optical signal, or sending information to other participants within the network. When the location information comprises complex temporal and spatial information, such as the track, the matching will probably not be a complete matching, but a matching that may be expressed with a value less than 1. Such a matching process is well known to those skilled in the art, which will not be described herein. The identity verification module 106 may set up a threshold value for the degree of matching, and consequently assign a matching at a degree to a corresponding authority. Similarly, matching may be determined in such a way for both the identity information collection module and the authentication and authorization module.

As a supplement to the authentication and authorization module 108, the second verification module 110 performs the second verification on a mobile terminal that has been successfully authenticated and authorized by the module 108, and the verification method includes, for example, user name password, fingerprint, iris, sound wave, two-dimensional code or dynamic password.

The second verification module 110 may be implemented either as hardware or as a software application, i.e. APP. It can be implemented in the wireless router, independently or even in a third participating party. The third participating party is, for example, a mobile phone or other mobile terminal that is in communications with the wireless router.

The intelligent learning module 112 stores a location model, identity information, the corresponding relation between the location model and identity information, and the corresponding relation between the location model and access authority in a comprehensive way, sends the above information to the cloud platform module 114, receives updates made by the cloud platform 114 to the above information, and thereby updates and adjusts the information in the identity information collection module 104, the identity verification module 106, the authentication and authorization module 108, and the second verification module 110, so as to update and adjust the strategy of authentication and authorization to meet different access needs by different users and the needs by different applications.

The input information to the intelligent learning module 112 comprises the input information and output records of the wireless distance-measuring and positioning module 102, the identity information collection module 104, the identity verification module 106, the authentication and authorization module 108, the second verification module 110 and the cloud platform module 114, and the output information to the intelligent learning module 112 comprises function adjustments and adjustments to the output results of the wireless distance-measuring and positioning module 102, the identity information collection module 104, the identity verification module 106, the authentication and authorization module 108, the second verification module 110 and the cloud platform module 114.

The intelligent learning module 112 is implemented in the wireless router, i.e. "locally" relative to the cloud platform. It may also be implemented not locally, i.e. a device on the network. Since the wireless router maintains the data transmission with the network, the local implementation achieves the similar results as the non-local implementation.

Relative to the local where the wireless router is located, the cloud platform module 114 is implemented in a non-local network device, for example, one or more servers. The cloud platform module 114 receives and stores the information in all other modules sent by the intelligent learning module 112, performs analysis and adjustments to them, and passes the analysis and adjustment results down to the intelligent learning module 112, thereby achieving corresponding changes to the authentication and authorization mechanism of the wireless router.

Similar to the above APP implementation of the second verification module, the wireless distance-measuring and positioning module 102, the identity information collection module 104, the identity verification module 106, the authentication and authorization module 108, and the intelligent learning module 112 may also be implemented either as hardware or as software applications, i.e. APP. They can be implemented in the wireless router or in a mobile terminal similar to a mobile phone or computer, in particular a mobile phone that has been set as a WiFi hot spot. After the installation of the software application, the mobile terminal may also be capable of distance measurement and positioning, and achieve the functions of the above
Modules. In the documents that describe the present invention, therefore, the term "router" should be interpreted as a radio-based data reception, transformation and transmission device in a broad sense, which is not just a router in the commercial sense, but also comprises mobile terminals set as WiFi hot spots and mobile terminals capable of executing authentication and authorization or other similar devices, and further comprises "wireless gateway" or "intelligent gateway.

The above location information may be the location information of a mobile terminal relative to a wireless router, or the location information of a mobile terminal relative to an accessory distance measurement device, or other devices capable of corresponding functions, E.g. another mobile terminal installed with APP that has been verified, authenticated and authorized.

In addition, not every one of the modules shows in Fig. 1 is a required part to implement the solution of the present invention. When the solution of the present invention is implemented, these parts may be accepted, rejected or combined in a variety of ways according to technical rationality and specific demand. To show them all in Fig. 1 is for the purpose of concise and convenient description. Similarly, the "mobile terminal" also comprises clients and other devices that are installed with client software and therefore can establish connection with a wireless router.

The above solution of the present invention realizes a process of authentication and authorization with reduced artificial intervention such that it becomes more simple and convenient, improves user experience, and creates conditions for realizing some specific wireless network-based applications.

Fig. 2 illustrates the method for authentication and authorization according to another embodiment of the present invention.

At Step S 102, the wireless router acquires a mobile phone's location information, which Is similar to the embodiment above. The location information herein comprises distance information, relative location information, and track information, which may have a temporal attribute. As a result, a temporal and spatial location model is formed, which may be compared and matched with the predetermined temporal and spatial location information. The determination of location information may occur between a mobile phone and the wireless router, or between a mobile phone and an accessory distance measurement device of the wireless router, or between a mobile phone and another mobile terminal installed with a corresponding software application APP.

Similar to the above embodiment, the way in which the wireless router acquires a mobile terminal may be at least one of the **following**:
The wireless router measures the distance and positions the mobile terminal by receiving RF signals therefrom;
The mobile terminal provides its location information to the wireless router;
The wireless router receives the location information of the mobile terminal from a third party.

At Step S 104, the location information of the mobile phone acquired by the wireless router is compared with the predetermined location model, thereby determining the match between the location information and the predetermined location model.

For example, the location information of the mobile phone is within 5 cm of the wireless router and stays for longer than 3 s.

At Step S 106, the wireless router acquires the identity information of the mobile phone.

At Step S 108, the authentication and authorization of the mobile phone is completed, and the mobile phone is allowed to access the wireless network.

Similar to the above embodiment, moreover, the method in this embodiment may further comprise the following steps.

Awarding the mobile phone a corresponding access authority according to the corresponding relation between the predetermined location model and the network access authority and based on the mobile phone's s location information.

The authentication and authorization of a mobile phone may further comprise a second verification process, which completes the authentication and authorization of the mobile phone according to user name password, fingerprint, iris, sound wave, two-dimensional code or dynamic password.

Sending the location information, the location model, the corresponding relation between the location model and access authority, and the identity information of the mobile phone to a cloud server connected via a network, the cloud server analyzes the received information, makes adjustment or revision to the location model, the corresponding relation between the location model and access authority according to user behavior, user need and application need, and sends the adjustment and revision down to the wireless router and associated APP, thereby carrying out the authentication and authorization of the mobile phone according to the adjusted and revised conditions.

The solution of the present invention is described above in an exemplary way. A variety of changes may be made to the described solution without departing from the spirit of the present invention.

## Claims

1. A wireless router, comprising a location information acquisition module, an identity information collection module, and an authentication and authorization module,
The location information acquisition module is used to acquire the location information of a mobile terminal;
The identity information collection module stores a predetermined location model and the corresponding relation between the location model and the identity information, determines that the location information matches the location model, and records the identity information of the mobile terminal;
The authentication and authorization module determines that the location **information** matches the location model, completes the authentication and authorization of the **mobile** terminal, and permits the mobile terminal to access the network of the wireless router.

2. The wireless router as set forth in Claim 1, **characterized in that** the wireless router further comprises:
An identity verification module for determining the access authority of a mobile terminal according to the preset corresponding relation between location relation and the **access** authority.

3. The wireless router as set forth in Claim 1, **characterized in that** the wireless router further comprises:
A second verification module for verifying a mobile terminal that has been successfully authenticated and authorized by the authentication and authorization module according to user name password, or fingerprint, or iris, or sound wave, or two-dimensional code or dynamic password.

4. The wireless router as set forth in Claim 1, **characterized in that** the wireless router further comprises:
An intelligent learning module for storing a location model, identity information, the corresponding relation between the location model and identity information, and the corresponding relation between the location model and access authority, sending the location model, the identity information, the corresponding relation between the location model and identity information, and the corresponding relation between the location model and access authority to a cloud platform module connected to the wireless router via a network, receiving revisions and adjustments made by the cloud platform module to the location model, the identity information, the corresponding relation between the location model and identity information, and the corresponding relation between the location model and access authority, and sending the revisions and adjustments to the location information acquisition module, the identity information verification module, the authentication and authorization module and the second verification module.

5. The wireless router as set forth in any one of Claims 1 to 4, **characterized in that**
The location information acquisition module acquires the location information of a mobile terminal in at least one of the following **ways**:
The location information acquisition module comprises a wireless distance-measuring and positioning module for acquiring radio frequency (RF) signals from a mobile terminal to measure the distance of and position the mobile terminal so as to acquire the location information of the mobile terminal;
The location information acquisition module receives the location information of a mobile terminal from the mobile terminal;
The location information acquisition module receives the location information of a mobile terminal from a third party.

6. The wireless router as set forth in Claim 5, **characterized in that**
The location information comprises a mobile terminal's distance information, relative location information, track information and time-dependent changes thereof;
The distance, relative location and track are the distance, relative location and track of a mobile terminal relative to the wireless router, an accessory distance 1 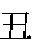 easurer 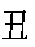 ent device of thewireless router or another terminal that has been authorized by the wireless router.

7. The wireless router as set forth in Claim 5, **characterized in that**
The identity information of a mobile terminal comprises at least one of the following information items: IP address, MAC address, mobile phone number, mobile terminal device number, manufacturer logo and time stamp.

8. A method for wireless authentication and authorization, comprising the steps of:
Acquiring a mobile terminal's location information with a wireless router;
Comparing the mobile terminal's location information acquired by the wireless router with a predetermined location model, and determining the match between the location information and the predetermined location model;
Acquiring the mobile terminal's identity information with the wireless router; and
Completing the authentication and authorization of the mobile terminal, and permitting The mobile terminal to access the wireless network.

9. The method as set forth in Claim 8, **characterized in that** the method further comprises a step of:
Awarding the mobile terminal a corresponding access authority according to the corresponding relation **between** the predetermined location model and the network access authority and based on the mobile terminal's location information.

10. The method as set forth in Claim 8, **characterized in that** the method further comprises a step of:
Verifying the mobile terminal according to user name password, fingerprint, iris, sound wave, two-dimensional code or dynamic password.

11. The method as set forth in Claim 10, **characterized in that** the method further comprises a step of:
Sending the location information, the location model, the corresponding relation between the location model and access authority, and the identity information of the mobile terminal to a cloud server connected via a network, the cloud server analyzes, adjusts or revises the received information, and sends the adjustments and revisions to the wireless router.

12. The method as set forth in any one of Claims 8 to 11, **characterized in that**
The step of acquiring a mobile terminal's location information by the wireless router further comprises at least one of the following steps of:
The wireless distance-measuring and positioning module receives RF signals from a mobile terminal to measure the distance of and position the mobile terminal so as to acquire the location information of the mobile terminal;
Receiving the location information of a mobile terminal from the mobile terminal;
Receiving the location information of a mobile terminal from a third party.

13. The method as set forth in Claim 12, **characterized in that**
The location information comprises a mobile terminal's distance information, relative location information, track information and time-dependent changes thereof;
The distance, relative location and track are the distance, relative location and track of a mobile terminal relative to the wireless router, an accessory distance 1 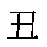 easurer 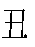 ent device of thewireless router or another terminal that has been authorized by the wireless router.

14. The method as set forth in Claim 12, **characterized in that**
The identity information of a mobile terminal comprises at least one of the following information items: IP address, MAC address, mobile phone number, mobile terminal device number, manufacturer logo and time stamp.

15. A computer program product, stored in non-transitory computer-readable medium executable by a router system, said program product includes a location information acquisition module, an identity information collection module, and an authentication and authorization module: when instructions in the program product are executed, to carry out the following steps:
The location information acquisition module is used to acquire the location information of a mobile terminal;
The identity information collection module stores a predetermined location model and the corresponding relation between the location model and the identity information, determines that the location information matches the location model, and records the identity information of the mobile terminal;
The authentication and authorization module determines that the location information matches the location model, completes the authentication and authorization of the mobile terminal, and permits the mobile terminal to access the network of the wireless router.

16. A computer program product, stored in a non-transitory computer-readable medium executable by a router system, when instructions in the program product are executed, to carry out the following steps:
Acquiring a mobile terminal's location information with a wireless router;
Comparing the mobile terminal's location information acquired by the wireless router with A predetermined location model and determining the match between the location **information** and the predetermined location model;
Acquiring the mobile terminal's identity information with the wireless router; and
Completing the authentication and authorization of the mobile terminal, and permitting the Mobile terminal to access the wireless **network.**
